# EUROPEAN PATENT SPECIFICATION

(11) **EP 3 685 079 B1**
(45) Date of publication and mention of the grant of the patent: **30.10.2024**
(21) Application number: 17924891.9
(22) Date of filing: 18.09.2017
(51) Int. Cl.: F16K 31/00, F15B 13/00, F15B 13/08

(54) **A FLUID CONTROL SYSTEM FOR MONITORING RESPONSE TIME IN A VALVE MANIFOLD ASSEMBLY**
FLUIDISCHES KONTROLLSYSTEM ZUR ÜBERWACHUNG DER REAKTIONSZEIT IN EINER VENTILVERTEILERANORDNUNG
SYSTÈME DE CONTRÔLE FLUIDIQUE POUR SURVEILLANCE DE TEMPS DE RÉPONSE DANS UN ÎLOT DE DISTRIBUTEUR

(43) Date of publication of application: 29.07.2020
(73) Proprietor: Asco, L.P., Novi, MI 48377 (US)
(72) Inventor: DE CAROLIS, Enrico, Oakland Township, MI 48306 (US); WELLS, Gregory, A., Sr., Glaendale, AZ 85034 (US); FRAZIER, Mitch, Chandler, AZ 85225 (US)
(74) Representative: Oppermann, Mark
(86) International application number: PCT/US2017/052039
(87) International publication number: WO 2019/055046

(56) References cited:
- WO-A1-2017/076430
- US-A- 5 329 956
- US-A1- 2002 035 414
- US-A1- 2003 226 594
- US-A1- 2005 072 954
- US-A1- 2015 007 713

## Description

### TECHNICAL FIELD

This invention relates to a fluid control system and more particularly to a system for monitoring performance response time for a solenoid control valve in a valve manifold and its respective field device.

### BACKGROUND OF THE INVENTION

Field bus systems incorporating a manifold assembly are commonly used in an industrial line to selectively direct pneumatic pressure to various pneumatically operated field devices. The manifold assembly is commonly modular and is assembled from a plurality of individual fieldbus modules including I/O modules, a communication module, and manifold members. The manifold member includes a manifold block that mounts one or more individual control valves, often referred to as solenoid valves, valve blocks or merely valve members that control the direction of pneumatic flow for operating respective field devices. The manifold member often has a common pilot pressure passage and a main pressure passage that are connected to the solenoid valves which in turn control the flow of main pressure to a respective pneumatically operated field device. The field device is often operated by a piston and cylinder assembly that cycles from a retracted position to an extended position and vice versa. As used herein, a motion cycle is from the retracted to the extended position or from the extended position to the retracted position.

These manifold assemblies have the capacity to incorporate many manifold blocks, and valve stations which in turn operate many field devices in a large manufacturing or industrial line. As each control valve needs to be correctly operating to maintain correct operation of the respective field device, failure of a single control valve and its respective pneumatically operated field device may cause an entire manufacturing or industrial line to cease operating.

It is preferable to maintain each field device and its control valve and connecting tubing in operating condition and to replace any component before its failure during scheduled maintenance and normal down time to prevent unscheduled cessation of the line. However, monitoring of only the control valve is limited. Monitoring of only the control valve does not provide any information about of any problems downstream i.e. at the pneumatic tubing leading to the field device or within the field device itself. Hence it is highly desirous and advantageous to also monitor the performance time i.e. the response time of a piston and cylinder assembly from the time of the initiation of the cycle to the end of the cycle which then can tell if any problems may be occurring at the field device or at any point upstream thereof to the control valve. A partial list of various parameters that can affect performance are pinched or disconnected tubing, leaks for example in either the valve, cylinder, fittings or tubing, a manual change or tampering of the flow control, a manual change or tampering in the pressure regulator, changes in load, binding of the cylinder caused by wear or rod side loading or valve wear, cylinder wear or sensor malfunction.

Previous monitoring parameters for monitoring field devices have been previously sent to the field bus PLC. In order for an operator on the floor to see any warnings from the PLC, the PLC needs to send an indicator signal to the main control unit of the bank which then needs to send the indicator signal to the appropriate I/O unit. This receiving and re-sending the indicator signals to the PLC and through the main control unit and to the I/O unit is unnecessarily complicated.

What is desired is to provide an expeditiously constructed warning system that provides a timing function from actuation of the valve at the field bus to the final cycle position of the field device, for example the cycle time it takes for a piston cylinder to move from a retracted position to an extended position and vice versa and where the elapsed time signal is then sent directly to the I/O module in the field bus for the respective manifold control valve in the manifold bank. What is also desired is to have a fieldbus system with intelligence and memory to compare the elapsed time signal value with predetermined acceptable elapsed time value and to provide a warning or other indication at the fieldbus modules if an unacceptable variance in the elapsed time valve has occurred compared to the predetermined acceptable elapsed time value. What is also desired is to have the above-mentioned advantage of a monitoring system by using hardware that is already installed and/or readily available.

In this connection, a fault detection system for an actuator configured to detect a fault of the actuator based on a stroke time of a movable member of the actuator is known from document US 2015/0007713 A1. This fault detection system comprises a first sensor disposed on one end of the actuator along a displacement direction of the movable member, and which detects the movable member upon displacement thereof to the one end, and a second sensor disposed on another end of the actuator along the displacement direction, and which detects the movable member upon displacement thereof to the other end. In this prior art a fault detecting device detects a fault of the actuator based on detection results of the first sensor and the second sensor, wherein the fault detecting device has a stroke time calculator, which calculates a stroke time required for the movable member to travel between the one end and the other end, based on each of the detection results. Further, a statistical computation processing unit is provided that performs a predetermined statistical calculation with respect to the stroke time, wherein a fault detector detects whether or not a fault of the actuator has occurred, based on a processing result of the statistical computation processing unit.

Further, document WO 2017/076430 A1 discloses an electronic valve controller for an open-loop and closed-loop control of a valve island, which includes four or eight valve disks having pneumatic valves configured to perform a motion task. Applications for the open-loop and closed-loop control of the valve island can be loaded onto the electronic valve controller. In an exemplary embodiment, application monitoring can be executed by the electronic valve controller, in that, e.g., a wear status of a pneumatic drive and/or a guide is to be determined. The breakaway pressure of the pneumatic drive and the run time between the end positions is recorded in an internal measurement signal unit taking into consideration the pressure level, the temperature and/or further parameters (previous movement, etc.). This status is then stored as a DESIRED status and as a reference during start-up. During the run time, after activating the monitoring task the tribological status of the pneumatic drive, including status data regarding friction and wear of the components, can be determined if the cylinder is in its end position. Depending upon the recording of the ACTUAL status and the comparison with the DESIRED status, the result is transmitted as a status bit (e.g., "friction increased") to a monitoring entity, e.g., a calculation unit.

Finally, document US 5,329,956 discloses a non-intrusive method for timing the full operational motion of a valve plug in an electrically actuated, pneumatically operated valve. An actuation signal is sent to the valve actuator. A coil of wire around the valve actuator solenoid, an accelerometer on the solenoid slug, or a connection to a permanent pressure sensor, non-intrusively senses arrival of the actuation signal at the valve. The time measuring equipment begins timing when the actuation signal is sensed. A laser valve motion sensor then non-intrusively senses when the valve plug reaches a limit of motion. The time measuring equipment ends timing when the valve plug reaches a limit of motion. The time measuring equipment then records the elapsed time from the sensing of the arrival of actuation signal to the final limit of motion of the valve plug.

### SUMMARY OF THE INVENTION

The above objects are solved by the features specified in claim 1. Advantageous and appropriate developments of the invention form the subject matter of claims 2 to 8.

In accordance with the present invention, a fluid control system comprises: a communication module, a communication card, a series of I/O modules, a fieldbus network, and an external controller selected from a group comprising a Programmable Logic Computer (PLC), an Industrial Personal Computer (IPC) and a Distributed Control System (DCS), wherein the communication module is connected to the fieldbus network controlled by the external controller and the communication card; a plurality of manifold units interconnected together with the communication module and the series of I/O modules, each manifold unit including a manifold block mounting one or two solenoid control valves on its upper surface; a field device including a piston and cylinder assembly with a piston, the piston and cylinder assembly being pneumatically connected to one manifold block of the manifold unit, the piston being slidably movable within the cylinder between a retracted end and an extended end of the cylinder, and two position sensors for detecting a respective end position of the piston in the piston and cylinder assembly at the end of an actuation cycle, wherein the position sensors are each electrically connected through two electrically conductive cables to a separate input of a respective I/O module corresponding to the solenoid control valve that is pneumatically connected to the field device; a detection sensor for detecting the commencement of the actuation cycle for moving the piston in the piston and cylinder assembly; a timer configured to time an elapsed time between an initiation of the actuation cycle of the piston as sensed by said detection sensor for detecting the commencement of the actuation cycle and when one of said position sensors for detecting the end position detects the piston in its end position at the end of the actuation cycle; a storage device operably connected to said sensors configured to receive parameter data for establishing a normalized cycle profile and storing a predetermined tolerance boundary determined from said normalized cycle profile; a comparator operably connected to the storage device and said sensors configured to compare the elapsed time from said sensors to said normalized cycle profile and said predetermined tolerance boundary; and an alarm device operably connected to the comparator, that is actuated if the comparator compares the elapsed time from said sensors with said normalized cycle profile and said predetermined tolerance boundary and determines the elapsed time is outside of said predetermined tolerance boundary; wherein the timer, the storage device, the comparator and the alarm device are housed in the communication module or the respective I/O module that is connected to the communication module.

In one preferred embodiment of the fluid control system, the communication module includes a display for displaying the alarm.

In another preferred embodiment of the fluid control system, the I/O module includes a graphic display for displaying the alarm.

Further, preferably, the communication module is configured to send the alarm to an integrated webserver, to a Programmable Logic Computer (PLC), to an Industrial Personal Computer (IPC), or to a Distributed Control System (DCS) as external controller.

Finally, the alarm may comprise an audio alarm.

### BRIEF DESCRIPTION OF THE DRAWINGS

Reference now is made to the accompanying drawings in which:
Figure 1 is a perspective and partially schematic overview of one embodiment according to the invention;
Figure 2 is a cross sectional view of the valve housing and manifold block shown in Figure 1; and
Figure 3 is a schematic flow chart illustrating typical operation of one embodiment of the invention.

### DETAILED DESCRIPTION OF THE PREFERRED EMBODIMENT

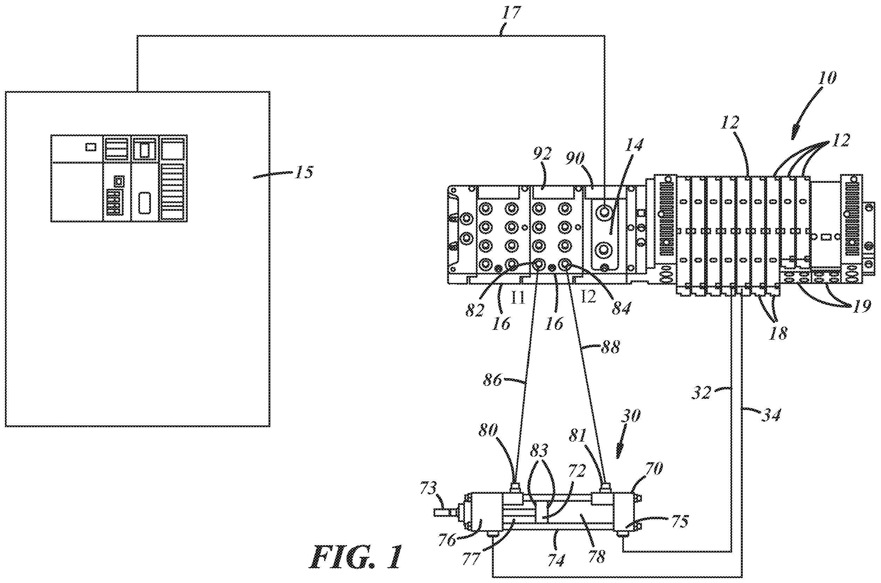

Referring now to Figure 1, a fluid control system 10 is modular in nature and has a plurality of valve manifold members also referred to as manifold units 12 interconnected together with a communication module 14 and a series of I/O modules 16. The communication module 14 is connected to a field bus network 17 controlled by a Programmable Logic Computer (PLC) and communication card 15. The particular number of manifold units 12 is dependent on the application and the capacity of the circuitry installed in each unit 12. Each manifold unit 12 includes a manifold block 19 which mounts one or two control valves 18 on its upper surface 13.

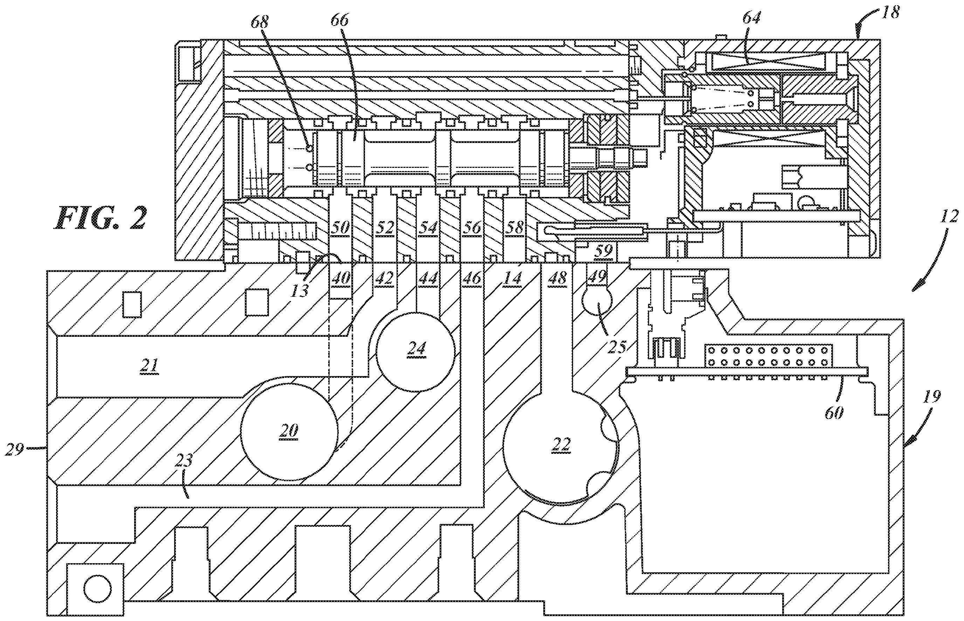

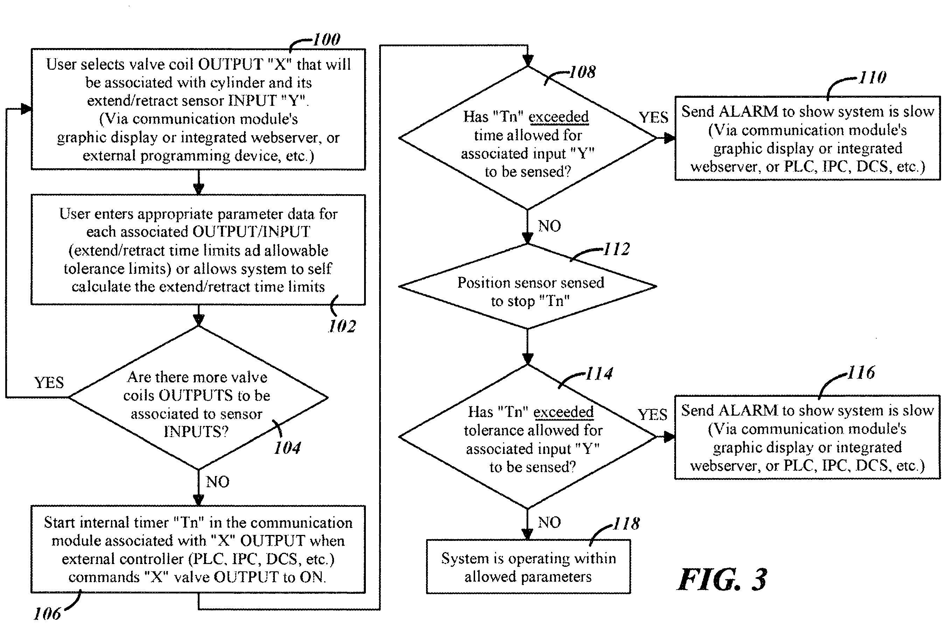

Referring to Figures 2 and 3, each manifold block 19 has fluid supply and fluid exhaust passages 20, 22, and 24 that extend laterally through the block to be in communication with an adjacent block 19. Each manifold block also has discharge passages 21 and 23 that extend to an outer wall 29 for connecting to a pneumatically operated field device 30 through two pneumatic conduits 32 and 34 as shown in Figure 1. Each manifold block also has a transverse pilot pressure passage 25. Each passage 20, 21, 22, 23, 24, and 25 connects to a respective port 40, 42, 44, 46, 48 and 49 at the upper surface 13 of the manifold block 19 which are in communication with respective ports 50, 52, 54, 56, 58, and 59 in the control valve 18.

A circuit board 60 is mounted in the manifold block 19 in known fashion and supplies electric power to the solenoid valve coil 64 of the control valve 18 for actuating the solenoid control valve 18 and moving its spool 66 through the force of pneumatic pressure from port 59 that is over the pilot pressure. When the spool 66 axially moves, it controls the communication between the ports 50-58, i.e. the opening and closing of ports 50-58. In a well-known fashion, the spool 66 may be biased to one direction by a spring 68. Although the embodiment shown is a single solenoid valve assembly, it will be understood that commercially available dual solenoid valve assemblies may also be used. Briefly in a dual solenoid valve, the return spring 68 is eliminated and a second solenoid is operated to provide fluid pressure to return the spool 66 (to the right as shown in Figure 2).

The field device 30 is commonly operated by a piston and cylinder assembly 70 which has a piston 72 connected to a piston rod 73 that extends out of one end 76 of a cylinder 74. The piston 72 is slidably housed within the cylinder 74 between a retracted position (to the right in Figure 1) and an extended position (to the left in Figure 1). The pneumatic conduits 32 and 34 are connected to opposite ends 75 and 76 and in communication to opposite internal pressure chambers 77 and 78 to provide fluid pressure to either chamber 77 and 78 for cycling the piston 72 back and forth within the cylinder 74 to either retract or extend the piston rod 73.

Two position sensors 80 and 81 are mounted on the housing of cylinder 74. These position sensors 80 and 81 may be Hall effect sensors. The piston 72 may have a magnet 83 mounted thereon which when in proximity to either sensor 80 or 81 triggers the sensor to send an output signal.

The position sensors 80 and 81 are each electrically connected to a separate input 82 and 84 of the respective I/O module 16 corresponding to the control valve 18 that is pneumatically connected to the field device 30. The connection is through two electrically conductive cables 86 and 88. Wireless communication is also foreseen as a possibility, not covered by the claimed invention.

Reference is now made to Figure 3 to describe the general operation of the disclosed embodiment. Referring to box 100, an operator (user) selects the appropriate valve coil 64 that operates the respective field device 30 and then enters appropriate time and other parameter data for each I/O module 16 associated with the solenoid valve coil 64 as indicated in box 102. The steps are repeated as set forth in box 104 until all output parameters are determined. After all appropriate outputs are set, the cycle operation is commenced. As used herein, a cycle commences when the main communication module 14 sends a signal (by providing an operating voltage or ending the operating voltage) to either actuate or de-actuate the solenoid valve coil 64 of the control valve 18. The signal in effect commences the cycle to move the piston 72 from its present end position (either retracted or extended) to the other end position (either extended or retracted). When the cycle is commenced, a detection sensor senses the change in voltage in the actuation circuit line and an internal timer Tn in the main communication module 14 is started as illustrated in box 106. The acceptable limits and tolerances have already been set in the first step in box 100 and stored in an internal storage in the main communication module 14.

If the timer does not shut down due to some defect, the time "Tn" will exceed the time allowed for the associated input Y (either input 82 or 84) as indicated in box 108 and an alarm is sent. The alarm can be a visual indication on a graphic display 92 of the I/O unit module 16 or a display 90 of the communication module 14. The alarm can also be sent to an integrated webserver or the PLC 15 (or an IPC and DCS etc.) as illustrated in box 110. Audio as well as visual alarms are foreseen.

When the piston 72 moves to the other end, one of the positions sensors 80 and 81 will sense when the piston 72 reaches the end position and a signal is sent via either cable 86 or 88 to input 82 or 84 which turns off the timer and provides the final time Tn as shown in box 112. A comparator then compares Tn and determines if it is within tolerances previously set for the valve as illustrated in box 114. If the tolerances are exceeded, an alarm is sent from the I/O module 16 to the communication module 14 and displayed on either graphic display 90 or 92, an integrated webserver or the PLC 15 (or an IPC and DCS etc.) as illustrated in box 116. It should be noted that the tolerances can also be set for being too short. Overly fast times may occur if someone manually increased the pressure in main line beyond the desired pressure, lowered the load on the field device or other changes that can cause faster than proper times.

If the final time Tn is within parameters, the system continues and the program is reset for the next cycle as illustrated in box 118.

Other parameters may be substituted such as spool motion or flow rate in addition to the position and time parameters. The choice of parameters may be selected depending on the specific application of the control valve.

When a control valve or its accompanying field device 30 shows some degradation before a complete failure, an audio alarm or visual notification is provided which allows the control valve or field device 30 to be repaired or replaced at the next down time or scheduled maintenance before complete failure occurs which can then avoid unscheduled and unnecessary line stoppage.

It is also foreseen that the dual solenoid valves can be used with this monitoring and timing system. When dual solenoid valves are used, the respective cycle is commenced when an actuating voltage is sent to a respective first or second solenoid for the valve. The cessation of the actuating voltage is ignored for setting the next cycle. The next cycle is commenced when an actuating voltage is sent to the other of the first or second solenoid.

It is also foreseen that one of the position sensors may be a linear potentiometer that measures analog voltage depending on the linear position of the piston within the cylinder for measuring acceleration and deceleration using the position of the piston and elapsed time.

In this fashion, by having the signal that initiates the cycle also turning on the timer and timing the cycle from the moment a signal is initiated until the piston achieves its end position, an improved level of prognostics or preventative maintenance is achieved. Not only the valve is monitored, but also the pneumatic tubing 32 and 34, and any binding or problems with the cylinder and piston or other binding parts of the field device connected to the piston rod 73 can be detected. The cycle is monitored from its initiation to its end. The parameters that can affect the cycle time include leaks in the valve cylinder fitting and tubing for example, the manual change in the flow control, manual change in a pressure regulator, changes in load, binding in the cylinder and piston assembly caused by wear or rod side loading, valve wear, cylinder wear, weak return spring in the solenoid valve, sensor malfunction, input module malfunction and other changes or malfunctions.

The timing of the cycle commencing with the actuating voltage change sent to the coil and ending with the piston reaching its end can be used to monitor the function and if any changes over time and deviations from the set forth proper time is sensed, an appropriate alarm can be sent to provide warning that something in the line from the coil and valve to the field device is not operating up to design and set standards.

Other variations and modifications are possible without departing from the scope of the present invention as defined by the appended claims.

## Claims

1. A fluid control system (10) comprising:
a communication module (14), a communication card (15), a series of I/O modules (16), a fieldbus network (17), and an external controller selected from a group comprising a Programmable Logic Computer (PLC), an Industrial Personal Computer (IPC) and a Distributed Control System (DCS), wherein the communication module (14) is connected to the fieldbus network (17) controlled by the external controller and the communication card (15);
a plurality of manifold units (12) interconnected together with the communication module (14) and the series of I/O modules (16), each manifold unit (12) including a manifold block (19) mounting one or two solenoid control valves (18) on its upper surface (13);
a field device (30) including a piston and cylinder assembly (70) with a piston (72), the piston and cylinder assembly (70) being pneumatically connected to one manifold block (19) of the manifold unit (12), the piston (72) being slidably movable within the cylinder (74) between a retracted end and an extended end of the cylinder (74), and two position sensors (80, 81) for detecting a respective end position of the piston (72) in the piston and cylinder assembly (70) at the end of an actuation cycle wherein the position sensors (80, 81) are each electrically connected through two electrically conductive cables (86,88) to a separate input (82, 84) of a respective I/O module (16) corresponding to the solenoid control valve (18) that is pneumatically connected to the field device (30);
a detection sensor for detecting the commencement of the actuation cycle for moving the piston (72) in the piston and cylinder assembly (70);
a timer (Tn) configured to time an elapsed time between an initiation of the actuation cycle of the piston (72) as sensed by said detection sensor for detecting the commencement of the actuation cycle and when one of said position sensors (80, 81) for detecting the end position detects the piston (72) in its end position at the end of the actuation cycle;
a storage device operably connected to said sensors configured to receive parameter data for establishing a normalized cycle profile and storing a predetermined tolerance boundary determined from said normalized cycle profile;
a comparator operably connected to the storage device and said sensors configured to compare the elapsed time from said sensors to said normalized cycle profile and said predetermined tolerance boundary; and
an alarm device operably connected to the comparator, that is actuated if the comparator compares the lapsed time from said sensors with said normalized cycle profile and said predetermined tolerance boundary and determines the elapsed time is outside of said predetermined tolerance boundary;
wherein the timer (Tn), the storage device, the comparator and the alarm device are housed in the communication module (14) or the respective I/O module (16) that is connected to the communication module (14).

2. The fluid control system (10) according to claim 1, wherein the communication module (14) includes a display (90) for displaying the alarm.

3. The fluid control system (10) according to claim 1, wherein the I/O module (16) includes a graphic display (92) for displaying the alarm.

4. The fluid control system (10) according to claim 1, wherein the communication module (14) is configured to send the alarm to an integrated webserver.

5. The fluid control system (10) according to claim 1, wherein the communication module (14) is configured to send the alarm to a Programmable Logic Computer (PLC) as external controller.

6. The fluid control system (10) according to claim 1, wherein the communication module (14) is configured to send the alarm to an Industrial Personal Computer (IPC) as external controller.

7. The fluid control system (10) according to claim 1, wherein the communication module (14) is configured to send the alarm to a Distributed Control System (DCS) as external controller.

8. The fluid control system (10) according to claim 1, wherein the alarm comprises an audio alarm.

## Patentansprüche

1. Ein Fluidsteuerungssystem (10), umfassend:
ein Kommunikationsmodul (14), eine Kommunikationskarte (15), eine Reihe von E/A-Modulen (16), ein Feldbus-Netzwerk (17) und eine externe Steuereinheit, die aus einer Gruppe ausgewählt ist, welche eine speicherprogrammierbare Steuerung (PLC), einen industriellen Einzelplatzrechner (IPC) und ein Prozessleitsystem (DCS) umfasst, wobei das Kommunikationsmodul (14) mit dem Feldbus-Netzwerk (17) verbunden ist, das durch die externe Steuereinheit und die Kommunikationskarte (15) gesteuert ist;
eine Mehrzahl von Verteilereinheiten (12), die mit dem Kommunikationsmodul (14) und der Reihe von E/A-Modulen (16) verbunden sind, wobei jede Verteilereinheit (12) einen Verteilerblock (19) umfasst, der ein oder zwei Magnetsteuerventile (18) auf seiner Oberseite (13) trägt;
ein Feldgerät (30), umfassend eine Kolben- und Zylinderbaugruppe (70) mit einem Kolben (72), wobei die Kolben- und Zylinderbaugruppe (70) pneumatisch mit einem Verteilerblock (19) der Verteilereinheit (12) verbunden ist, wobei der Kolben (72) innerhalb des Zylinders (74) zwischen einem eingezogenen Ende und einem ausgefahrenen Ende des Zylinders (74) verschiebbar ist, und zwei Positionssensoren (80, 81) zum Erfassen einer jeweiligen Endposition des Kolbens (72) in der Kolben- und Zylinderbaugruppe (70) am Ende eines Betätigungszyklus, wobei die Positionssensoren (80, 81) jeweils über zwei elektrisch leitende Kabel (86, 88) mit einem separaten Eingang (82, 84) eines jeweiligen E/A-Moduls (16) verbunden sind, das dem Magnetsteuerventil (18) zugeordnet ist, welches pneumatisch mit dem Feldgerät (30) verbunden ist;
einen Erfassungssensor zum Erfassen des Beginns des Betätigungszyklus zum Bewegen des Kolbens (72) in der Kolben- und Zylinderbaugruppe (70);
einen Zeitgeber (Tn), der so konfiguriert ist, dass er eine verstrichene Zeit bestimmt zwischen einem Beginn des Betätigungszyklus des Kolbens (72), wie er von dem Erfassungssensor zum Erfassen des Beginns des Betätigungszyklus erfasst worden ist, und wenn einer der Positionssensoren (80, 81) zum Erfassen der Endposition den Kolben (72) in seiner Endposition am Ende des Betätigungszyklus erfasst;
eine Speichereinrichtung, die betriebsmäßig mit den Sensoren verbunden und so konfiguriert ist, dass sie Parameterdaten zur Erstellung eines normalisierten Zyklusprofils empfängt und eine vorbestimmte Toleranzgrenze speichert, die aus dem normalisierten Zyklusprofil bestimmt worden ist;
einen Komparator, der betriebsmäßig mit der Speichereinrichtung und den Sensoren verbunden und so konfiguriert ist, dass er die abgelaufene Zeit von den Sensoren mit dem normalisierten Zyklusprofil und der vorbestimmten Toleranzgrenze vergleicht; und
eine betriebsmäßig mit dem Komparator verbundene Alarmeinrichtung, die aktiviert wird, wenn der Komparator die abgelaufene Zeit von den Sensoren mit dem normalisierten Zyklusprofil und der vorbestimmten Toleranzgrenze vergleicht und feststellt, dass die abgelaufene Zeit außerhalb der vorbestimmten Toleranzgrenze liegt;
wobei der Zeitgeber (Tn), die Speichereinrichtung, der Komparator und die Alarmeinrichtung in dem Kommunikationsmodul (14) oder dem jeweiligen E/A-Modul (16) untergebracht sind, das mit dem Kommunikationsmodul (14) verbunden ist.

2. Fluidsteuerungssystem (10) nach Anspruch 1, wobei das Kommunikationsmodul (14) ein Display (90) zur Anzeige des Alarms umfasst.

3. Fluidsteuerungssystem (10) nach Anspruch 1, wobei das E/A-Modul (16) ein Grafikdisplay (92) zur Anzeige des Alarms umfasst.

4. Fluidsteuerungssystem (10) nach Anspruch 1, wobei das Kommunikationsmodul (14) so konfiguriert ist, dass es den Alarm an einen integrierten Webserver sendet.

5. Fluidsteuerungssystem (10) nach Anspruch 1, wobei das Kommunikationsmodul (14) so konfiguriert ist, dass es den Alarm an eine speicherprogrammierbare Steuerung (SPS) als externe Steuereinheit sendet.

6. Fluidsteuerungssystem (10) nach Anspruch 1, wobei das Kommunikationsmodul (14) so konfiguriert ist, dass es den Alarm an einen industriellen Einzelplatzrechner (IPC) als externe Steuereinheit sendet.

7. Fluidsteuerungssystem (10) nach Anspruch 1, wobei das Kommunikationsmodul (14) so konfiguriert ist, dass es den Alarm an ein Prozessleitsystem (DCS) als externe Steuereinheit sendet.

8. Fluidsteuerungssystem (10) nach Anspruch 1, wobei der Alarm einen akustischen Alarm umfasst.

## Revendications

1. Système de régulation de fluide (10) comprenant :
un module de communication (14), une carte de communication (15), une série de modules E/S (16), un réseau de bus de terrain (17), et un dispositif de commande externe choisi dans un groupe comprenant un ordinateur logique programmable (PLC), un ordinateur personnel industriel (IPC) et un système de commande distribué (DCS), dans lequel le module de communication (14) est connecté au réseau de bus de terrain (17) commandé par le dispositif de commande externe et la carte de communication (15) ;
une pluralité d'unités de collecteurs (12) interconnectées avec le module de communication (14) et la série de modules E/S (16), chaque unité de collecteur (12) comportant un bloc de collecteur (19) sur la surface supérieure (13) duquel sont montées une ou deux électrovannes de commande (18) ;
un dispositif de terrain (30) comportant un ensemble piston-cylindre (70) avec un piston (72), l'ensemble piston-cylindre (70) étant connecté pneumatiquement à un collecteur (19) de l'unité de collecteur (12), le piston (72) pouvant se déplacer par coulissement à l'intérieur du cylindre (74) entre une extrémité rétractée et une extrémité déployée du cylindre (74), et deux capteurs de position (80, 81) pour détecter une position de fin respective du piston (72) de l'ensemble piston-cylindre (70) à la fin d'un cycle d'actionnement, dans lequel les capteurs de position (80, 81) sont chacun connectés électriquement par deux câbles conducteurs d'électricité (86, 88) à une entrée (82, 84) séparée d'un module E/S (16) respectif correspondant à l'électrovanne de commande (18) qui est connecté pneumatiquement au dispositif de terrain (30) ;
un capteur de détection pour détecter le début du cycle d'actionnement pour déplacer le piston (72) dans l'ensemble piston-cylindre (70) ;
un chronomètre (Tn) configuré pour chronométrer un temps écoulé entre l'initiation du cycle d'actionnement du piston (72) telle que détectée par ledit capteur de détection pour détecter le début du cycle d'actionnement et le moment où l'un desdits capteurs de position (80, 81) pour détecter la position de fin détecte le piston (72) dans sa position de fin à la fin du cycle d'actionnement ;
un dispositif de stockage connecté fonctionnellement auxdits capteurs, configuré pour recevoir des données de paramètres pour établir un profil de cycle normalisé et stocker une limite de tolérance prédéterminée déterminée à partir dudit profil de cycle normalisé ;
un comparateur connecté fonctionnellement au dispositif de stockage et auxdits capteurs, configuré pour comparer le temps écoulé desdits capteurs audit profil de cycle normalisé et ladite limite de tolérance prédéterminée ; et
un dispositif d'alarme connecté fonctionnellement au comparateur, qui est actionné si le comparateur compare le temps écoulé desdits capteurs avec ledit profil de cycle normalisé et ladite limite de tolérance prédéterminée et détermine que le temps écoulé est en dehors de ladite limite de tolérance prédéterminée ;
dans lequel le chronomètre (Tn), le dispositif de stockage, le comparateur et le dispositif d'alarme sont logés dans le module de communication (14) ou le module E/S (16) respectif qui est connecté au module de communication (14).

2. Système de régulation de fluide (10) selon la revendication 1, dans lequel le module de communication (14) comporte un dispositif d'affichage (90) pour afficher l'alarme.

3. Système de régulation de fluide (10) selon la revendication 1, dans lequel le module E/S (16) comporte un dispositif d'affichage graphique (92) pour afficher l'alarme.

4. Système de régulation de fluide (10) selon la revendication 1, dans lequel le module de communication (14) est configuré pour envoyer l'alarme à un serveur web intégré.

5. Système de régulation de fluide (10) selon la revendication 1, dans lequel le module de communication (14) est configuré pour envoyer l'alarme à un ordinateur logique programmable (PLC) comme dispositif de commande externe.

6. Système de régulation de fluide (10) selon la revendication 1, dans lequel le module de communication (14) est configuré pour envoyer l'alarme à un ordinateur personnel industriel (IPC) comme dispositif de commande externe.

7. Système de régulation de fluide (10) selon la revendication 1, dans lequel le module de communication (14) est configuré pour envoyer l'alarme à un système de commande distribué (DCS) comme dispositif de commande externe.

8. Système de régulation de fluide (10) selon la revendication 1, dans lequel l'alarme comprend une alarme sonore.
